# EUROPEAN PATENT APPLICATION

(11) **EP 3 370 118 A1**
(43) Date of publication of application: **05.09.2018**
(21) Application number: 18155076.5
(22) Date of filing: 05.02.2018
(51) Int. Cl.: G03G 15/00

(54) **POST-PROCESSING APPARATUS**

(30) Priority: 02.03.2017 JP 2017039857
(71) Applicant: Toshiba TEC Kabushiki Kaisha, Tokyo 141-0032 (JP); KABUSHIKI KAISHA TOSHIBA, Minato-ku Tokyo 105-8001 (JP)
(72) Inventor: Taki, Hiroyuki, Tokyo 141-8562 (JP)
(74) Representative: Hoffmann Eitle

(57) **Abstract**

A post-processing apparatus includes an acquisition section configured to acquire position information of a storage section arranged in a sheet; a destruction section configured to destroy the storage section; and a controller configured to operate the destruction section based on the position information of the storage section acquired by the acquisition section if a predetermined condition is met. The destruction section includes a standby section where the sheet stands by, a folding section configured to destroy the storage section by saddle-folding the sheet, and a sheet position adjustment mechanism configured to move the sheet placed in the standby section so that a position of the storage section becomes a position of the folding section.

## Description

### CROSS-REFERENCE TO RELATED APPLICATION

This application is based upon and claims the benefit of priority from Japanese Patent Application No. 2017-039857, filed March 2, 2017, the entire contents of which are incorporated herein by reference.

### FIELD

Embodiments described herein relate generally to a post-processing apparatus.

### BACKGROUND

A sheet with an RFID (radio frequency identifier) is used. An image is formed on a surface of the sheet and information is recorded in the storage section (RFID) of the sheet. A sheet in which the information is not normally recorded in the storage section is discarded. It is desirable to prevent leakage of the information from the storage section of the discarded sheet.

### SUMMARY OF THE INVENTION

One of the objects of the present invention is to improve prior art techniques and overcome at least some of the prior art problems as for instance above illustrated.

According to a first aspect of the present invention, it is provided a post-processing apparatus, comprising:
an acquisition section configured to acquire position information of a storage section arranged in a sheet;
a destruction section configured to destroy the storage section; and
a controller configured to operate the destruction section based on the position information of the storage section acquired by the acquisition section when a predetermined condition is met.

According to a second aspect of the present invention, it is provided a method of processing a sheet containing a storage section, comprising:
sending, by a controller, data to be written in the storage section in a writing operation;
writing data to the storage section in the writing operation;
detecting a position of the storage section; and
determining that at least a part of the writing operation fails when data read from the storage section differs from the data sent by the controller.

Optionally, the method of the second aspect comprises:
destroying the storage section after determining that at least a part of the writing operation fails,
wherein destroying the storage section comprises folding the storage section.

Optionally, the method of the second aspect may comprise:
destroying the storage section by bending the sheet containing the storage section, and then folding the bent sheet.

According to a third aspect of the present invention, it is provided an apparatus, comprising:
a folding section configured to fold a sheet received by the folding section; and
a controller configured to
determine a location of a storage section on the sheet, and
cause information in the storage section to be removed by manipulating the sheet when a predetermined condition is met.

Optionally, the apparatus of the third aspect further comprises:
a standby section configured to store a sheet in standby; and a position adjuster configured to move the sheet placed in the standby section such that at least a portion of the sheet aligns with the folding section.

Optionally, in the apparatus according to the third aspect, the controller is configured to:
upon determining that the sheet meets the predetermined condition, cause another sheet to remain in the standby section;
determine whether the another sheet meets the predetermined condition; and
responsive to determining that the sheet and the another sheet meet the predetermined condition, causing removal of information from respective storage sections of the first and second sheets.

Optionally, in the apparatus according to the third aspect, the folding section comprises a movable blade configured to guide the sheet.

Optionally, in the apparatus according to the third aspect, the controller is configured to cause a plurality of folding operations to be performed successively.

### DESCRIPTION OF THE DRAWINGS

Fig. 1 is a schematic diagram of an image forming apparatus;
Fig. 2 is a front sectional view illustrating a schematic arrangement of a post-processing apparatus according to an embodiment;
Fig. 3 is a perspective view illustrating the operation of a saddle folding unit;
Fig. 4 is a perspective view illustrating the operation of the saddle folding unit;
Fig. 5 is a perspective view illustrating the operation of the saddle folding unit; and
Fig. 6 is a perspective view of a saddle-folded sheet.

### DETAILED DESCRIPTION

In accordance with an embodiment, a post-processing apparatus comprises an acquisition section, a destruction section and a controller. The acquisition section acquires position information of a storage section arranged in a sheet. The destruction section destroys the storage section. The controller operates the destruction section based on the position information of the storage section acquired by the acquisition section if a predetermined condition is met.

Hereinafter, a post-processing apparatus relating to an embodiment is described with reference to the accompanying drawings. In an embodiment, XYZ directions are defined as follows. A Z direction is a vertical direction, and an X direction and a Y direction are horizontal directions. The Z direction is the upward-downward direction (height direction) of an image forming apparatus, and +Z direction is an upward direction. The X direction is a forward-backward direction (depth direction) of the image forming apparatus, and the +X direction is a forward direction. The Y direction is the left-right direction (width direction) of the image forming apparatus.

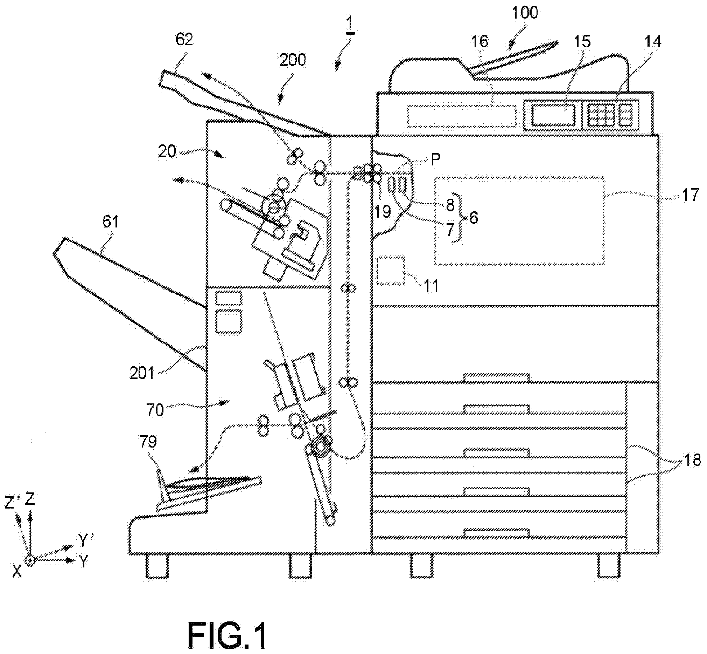

Fig. 1 is a schematic diagram of an image forming apparatus. The image forming apparatus 1 includes an image forming apparatus main body 100 and a post-processing apparatus 200. The image forming apparatus main body 100 and the post-processing apparatus 200 are arranged next to each other.

The image forming apparatus main body 100 is described.

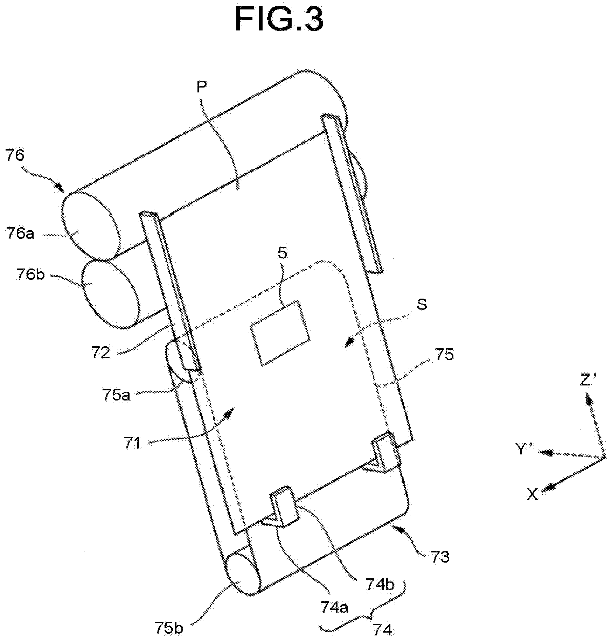

The image forming apparatus main body 100 forms an image on a sheet (image receiving medium) using a recording agent. The sheet is, for example, a plain paper or a label paper. As the sheet, a sheet in which a storage section such as an RFID section is embedded can be used. The RFID section is a section that reads and writes data information of an RF tag in a non-contact manner using radio waves. For example, as shown in Fig. 3, a storage section 5 is embedded in the center of a sheet P.

In an embodiment, toner is an exemplary recording agent. Both decolorizing recording agent and non-decolorizing agent can be used as the toner. The decoloring toner has a function of being decolored by applying energy from the outside. Application of the energy from the outside refers to application of external stimuli such as temperature, light with a specific wavelength, pressure and the like. The "decoloring" in the present embodiment refers to making an image formed with colors (containing not only a chromatic color but also an achromatic color such as white and black) visually invisible from the color of the background of the paper.

For example, the image forming apparatus main body 100 is a multi-functional peripheral. As shown in Fig. 1, the image forming apparatus main body 100 includes a display section 15, an operation section 14, an image reading section 16, a printer section 17, a sheet housing section 18 and a sheet discharge roller 19.

The display section 15 is an image display device such as a liquid crystal display or an organic EL (Electro Luminescence) display. The display section 15 displays various information relating to the image forming apparatus main body 100 and the post-processing apparatus 200.

The operation section 14 has a plurality of buttons. The operation section 14 detects and receives an operation by a user. The operation section 14 outputs a signal corresponding to the operation performed by the user to the first controller 11 of the image forming apparatus main body 100. The display section 15 and the operation section 14 may be provided as an integrated touch panel.

The image reading section 16 detects and reads image information which is a reading object as density of the light. The image reading section 16 outputs the read image information to the printer section 17.

The sheet housing section 18 accommodates sheets used for image formation. The sheet housing section 18 supplies the accommodated sheet to the printer section 17.

Based on image information generated by the image reading section 16 or the image information received via a communication path, the printer section 17 forms an image on the sheet. The printer section 17 has an image forming section, a transfer section and a fixing device (not shown). The image forming section forms an electrostatic latent image on a photoconductive drum based on the image information. The image forming section forms a visible image by attaching the toner to the electrostatic latent image. The transfer section transfers a visible image onto the sheet. The fixing device heats and pressurizes the toner to fix the visible image on the sheet.

The sheet discharge roller 19 is arranged near a sheet discharge port of the image forming apparatus main body 100. The sheet discharge roller 19 sends out the sheet on which the image is formed to the post-processing apparatus 200.

The image forming apparatus main body 100 has a communication section 6. The communication section 6 communicates with the storage section embedded in the sheet. For example, the communication section 6 is arranged at an upstream side in a conveyance direction of the sheet (simply referred to as a conveyance direction) with respect to the sheet discharge roller 19. The communication section 6 in this case is arranged at a downstream side in the conveyance direction with respect to the fixing device (not shown) of the printer section 17. The communication section 6 has a writing section 7 and a reading section 8. The writing section 7 writes data to the storage section. The reading section 8 reads data from the storage section. The reading section 8 is arranged at the downstream side in the conveyance direction with respect to the writing section 7.

The image forming apparatus main body 100 has a first controller 11. The first controller 11 controls the operation of each section of the image forming apparatus main body 100. The first controller 11 sends the data to be written in the storage section of the sheet to the writing section 7. The first controller 11 receives the data read from the storage section from the reading section 8.

For example, the first controller 11 acquires a position of the storage section in the sheet by any one of the following exemplary methods.

A first method to acquire a position of the storage section is performed by receiving position information of the storage section through the communication between the first controller 11 and writing section 7. The first controller 11 repeatedly sends the writing operation command to the writing section 7 with respect to the sheet P conveyed to the position of the writing section 7. The first controller 11 acquires the position of the storage section on the sheet P as the position of the storage section if at least a part of the writing succeeds (occurs normally).

A second method is a method by which a user selects a standard sheet. The first controller 11 stores the information of a plurality of standard sheets in advance. The information of the standard sheet contains the position information of the storage section on the sheet. The first controller 11 displays categories of the standard sheets on the display section 15 to urge the user to select the category. The first controller 11 acquires the position of the storage section from the information stored in advance for the standard sheet selected by the user.

A third method is a method by which the user designates the position of the storage section on the sheet. The user selects a storage section position designation mode with the operation section 14. The user reads the image of the sheet showing the position of the storage section with the image reading section 16. The first controller 11 acquires the position of the storage section from the image information read by the image reading section 16.

If a predetermined condition is met, the first controller 11 outputs a destruction command on the storage section. For example, the predetermined condition is the condition that at least a part of the writing to the storage section fails. The first controller 11 confirms (verifies) whether the data received from the reading section 8 is coincident with the data transmitted to the writing section 7. If the received data is not coincident with the transmission data, the first controller 11 determines that the writing to the storage section fails. In the present invention, a sheet subject to the destruction command on the storage section is referred to as an abnormal sheet in some cases. A sheet which is not subject to the destruction command on the storage section is referred to as a normal sheet in some cases.

The post-processing apparatus 200 is described.

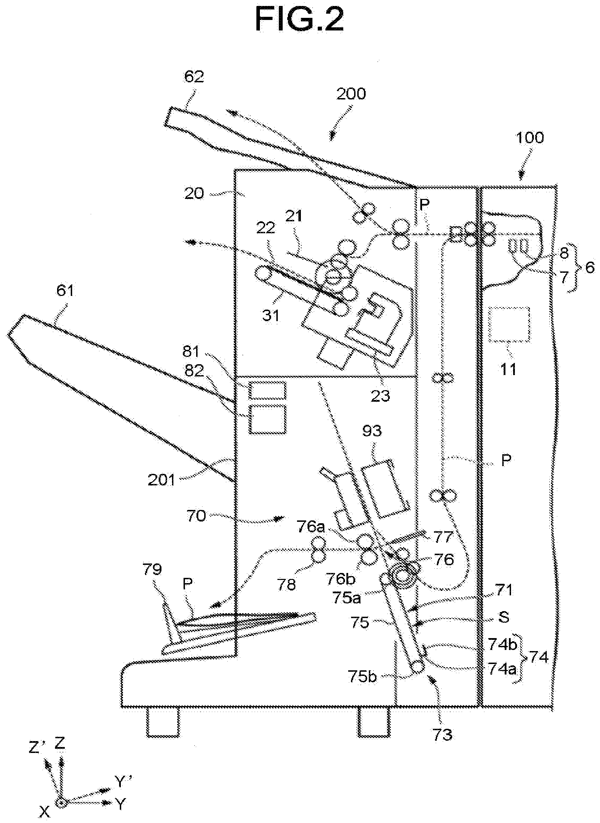

Fig. 2 is a front sectional view illustrating a schematic arrangement of the post-processing apparatus according to an embodiment. The post-processing apparatus 200 executes a post-processing of the sheet on which the image is formed. For example, the post-processing is a stapling processing or a saddle folding processing. The post-processing apparatus 200 includes a stapling unit 20 and a saddle folding unit 70.

The stapling unit 20 includes a standby tray 21, a processing tray 22 and a stapler 23. The standby tray 21 waits for the sheet P until the number of the sheets P conveyed from the image forming apparatus main body 100 reaches a predetermined number of sheets on which the stapling processing is executed. The standby tray 21 delivers the sheet P to the processing tray 22 at a time point when a predetermined number of the sheets P are accumulated. The processing tray 22 aligns a plurality of the sheets P and delivers them to the stapler 23. The stapler 23 executes the stapling processing on the plurality of the sheets P. The sheet P subject to the stapling processing is conveyed by a conveyance belt 31 to be discharged to a movable tray 61 described later.

The post-processing apparatus 200 includes the movable tray 61 and an upper tray 62. The sheet P after the stapling processing is discharged to the movable tray 61. The movable tray 61 can move in a vertical direction according to a loading amount of the sheets P. The upper tray 62 is arranged at the upper side of the post-processing apparatus 200. The sheet P which is not subject to the stapling processing is discharged to the upper tray 62.

The saddle folding unit 70 is described.

The saddle folding unit 70 includes a standby section 71, a sheet position adjustment mechanism 73, a folding section 76 and a lower tray 79. The standby section 71, the sheet position adjustment mechanism 73 and the folding section 76 are arranged inside a housing 201 of the post-processing apparatus 200. The lower tray 79 is exposed to the outside from the housing 201 of the post-processing apparatus 200.

In the standby section 71, the sheet P conveyed from the image forming apparatus main body 100 stands by. The standby section 71 is composed of a belt 75, a lower end support member 74 and a guide 72 (refer to Fig. 3).

The belt 75 is an endless belt. The belt 75 is stretched over a pair of belt rollers 75a and 75b separated from each other in the vertical direction. A surface S of the belt 75 (simply referred to as a surface S) between the pair of the belt rollers 75a and 75b is an inclined surface whose normal direction faces upward from the horizontal direction. The sheet P is placed on the surface S of the belt 75. The belt 75 supports a back surface of the sheet P standing by in the standby section 71.

In the present invention, a Y' direction and a Z' direction are defined as follows. The Y' direction is the normal direction of the surface S of the belt 75. The Z' direction is a direction perpendicular to the X direction and the Y' direction. The Z' direction is parallel to the surface S of the belt 75.

The lower end support member 74 including a vertical section 74a and a parallel section 74b is formed in an L shape. The vertical section 74a is arranged substantially perpendicular to the surface S of the belt 75. The parallel section 74b is arranged substantially parallel to the surface S. An end in the -Y' direction of the vertical section 74a is fixed to the surface S. At the end in the + Y' direction of the vertical section 74a, an end in the -Z' direction of the parallel section 74b is fixed. As shown in Fig. 3, a pair of lower end support members 74 is arranged apart from each other in the X direction.

As shown in Fig. 3, the lower end support member 74 supports the lower end of the sheet P standing by at the standby section 71. The vertical section 74a supports the sheet P from the lower side. The parallel section 74b supports the sheet P from the front side. As shown in Fig. 2, the surface S of the belt 75 and the parallel section 74b are separated by a length of the vertical section 74a. By the lower end support member 74, a plurality of the sheets P can stand by between the surface S of the belt 75 and the parallel section 74b.

The guide 72 is formed into a flat plate shape parallel to a Y'Z' plane. A pair of the guides 72 is arranged apart from each other in the X direction. The guide 72 supports a side section of the sheet P on standby in the standby section 71. The pair of the guides 72 may be formed to be movable in the X direction. With the plurality of the sheets P placed on the standby section 71, the pair of the guides 72 moves in the X direction towards the sheet P. As a result, a plurality of the sheets P standing by in the standby section 71 is aligned.

As shown in Fig. 3, the sheet position adjustment mechanism 73 moves the sheet P placed in the standby section 71. The sheet position adjustment mechanism 73 includes a belt 75, a pair of belt rollers 75a and 75b and the lower end support member 74. In other words, the belt 75 and the lower end support member 74 are common components of both the standby section 71 and the sheet position adjustment mechanism 73.

The belt 75 is stretched over the pair of the belt rollers 75a and 75b. One of the pair of the belt rollers 75a and 75b is rotationally driven by a motor (not shown) . Along with this, the belt 75 moves around the pair of the belt rollers 75a and 75b. As a result, the surface S of the belt 75 supporting the back surface of the sheet moves in the +Z' direction.

The lower end support member 74 is fixed to the surface S of the belt 75. The lower end support member 74 moves in the + Z' direction together with the surface S of the belt 75. The lower end support member 74 supports a lower end of the sheet P. The belt 75 and the lower end support member 74 move the supported sheet P in the + Z' direction. At this time, the sheet P slides on the surface of the guide 72. Thus, the sheet position adjustment mechanism 73 moves the sheet P placed in the standby section 71.

As shown in Fig. 2, the folding section 76 is arranged in the +Z' direction of the belt 75. The folding section 76 includes a blade 77 and a pair of folding rollers 76a and 76b.

The blade 77 is arranged in the +Y' direction of the surface S of the belt 75. The blade 77 is formed in a flat plate shape. The blade 77 is arranged to be perpendicular to the surface S of the belt 75. An edge of the blade 77 at the belt 75 side is parallel to rotation axes of the pair of the belt rollers 75a and 75b. The blade 77 is formed in a shape tapering toward the belt 75 side. The blade 77 is movable in an XY' plane in which the blade 77 is contained.

The pair of folding rollers 76a and 76b is arranged in the -Y' direction of the surface S of the belt 75. The rotation axes of the pair of folding rollers 76a and 76b are arranged to be parallel to the rotation axes of the pair of the belt rollers 75a and 75b. The plane including the rotation axes of the pair of folding rollers 76a and 76b is arranged to be parallel to the surface S of the belt 75. The rotation axes of the pair of folding rollers 76a and 76b are energized in a direction of approaching to each other. The blade 77 moves in the -Y' direction to a position sandwiched between the pair of folding rollers 76a and 76b.

The lower tray 79 is arranged below the post-processing apparatus 200. The lower tray 79 is arranged in the -Y' direction with respect to the folding section 76. The sheet P which is saddle-folded by the saddle folding unit 70 is discharged to the lower tray 79.

As shown in Fig. 2, the saddle folding unit 70 may include a stapling section 93 and a fold enhancing section 78. The stapling section 93 executes the stapling processing on the sheet P. The fold enhancing section 78 enhances the folding of the sheet P saddle-folded at the folding section 76.

The saddle folding unit 70 can be used in a bookbinding processing of the sheet P. The plurality of the sheets P stands by in the standby section 71. The sheet position adjustment mechanism 73 moves the plurality of the sheets P in the +Z' direction so that the central part of the plurality of the sheets P in the Z direction reaches a position of the stapling section 93. The stapling section 93 executes the stapling processing on the plurality of the sheets P. The sheet position adjustment mechanism 73 moves the plurality of the sheets P in the -Z' direction so that the central part of the plurality of the sheets P in the Z direction reaches the position of the blade 77. The blade 77 moves in the -Y' direction to push the plurality of the sheets P between the pair of the folding rollers 76a and 76b. As a result, the plurality of the sheets P is saddle-folded at the center part in the Z direction, and the folding enhancing section 78 enhances the folding of the plurality of the sheets P that are saddle-folded. The plurality of the sheets P bound by the stapling processing and the saddle folding processing is discharged to the lower tray 79.

As shown in Fig. 2, the post-processing apparatus 200 includes an acquisition section 81 and a second controller (controller) 82.

The acquisition section 81 acquires the position information of the storage section of the sheet P. The acquisition section 81 acquires the position information of the storage section acquired by the first controller 11 of the image forming apparatus main body 100 by data communication between the acquisition section 81 and the first controller 11. The acquisition section 81 sends the acquired position information of the storage section to the second controller 82.

The second controller 82 controls each section of the post-processing apparatus 200. The second controller 82 receives the position information of the storage section acquired by the acquisition section 81. As described above, the first controller 11 of the image forming apparatus main body 100 outputs the destruction command on the storage section if the predetermined condition is met. The second controller 82 receives the destruction command on the storage section outputted by the first controller 11. At this time, based on the position information of the storage section, the second controller 82 operates the saddle folding unit 70. In other words, if the predetermined condition is met, the second controller 82 operates the saddle folding unit 70 based on the position information of the storage section acquired by the acquisition section. The saddle folding unit 70 executes the saddle folding processing on the abnormal sheet at the position of the storage section to destroy the storage section.

The destruction operation on the storage section by the post-processing apparatus 200 is described.

If the destruction command on the storage section is not received, the second controller 82 discharges the normal sheet which is not an object of the destruction command on the storage section to the upper tray 62 or the movable tray 61. If the destruction command on the storage section is received, the second controller 82 operates the saddle folding unit 70. The second controller 82 conveys the abnormal sheet which is an object of the destruction command on the storage section to the standby section 71.

Fig. 3 to Fig. 5 are perspective views illustrating the operations of the saddle folding unit.

As shown in Fig. 3, the abnormal sheet P stands by in the standby section 71.

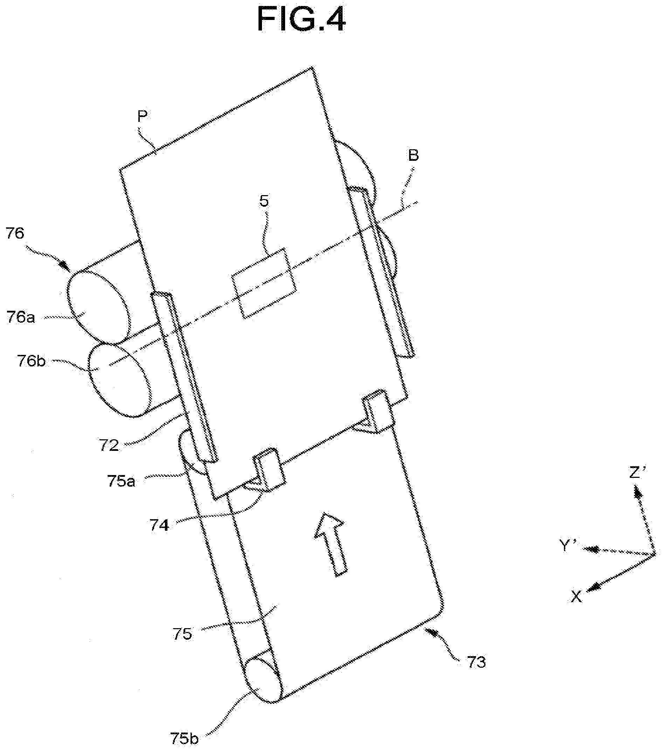

As shown in Fig. 4, the sheet position adjustment mechanism 73 moves the abnormal sheet P placed in the standby section 71. At this time, based on the position information of the storage section 5, the sheet position adjustment mechanism 73 moves the abnormal sheet P in + Z' direction so that the position of the storage section 5 in the Z' direction becomes a position B in the Z' direction of the folding section 76. The position B of the folding section 76 in the Z' direction is a position of the blade 77 in the Z' direction and is a position between the pair of the folding rollers 76a and 76b.

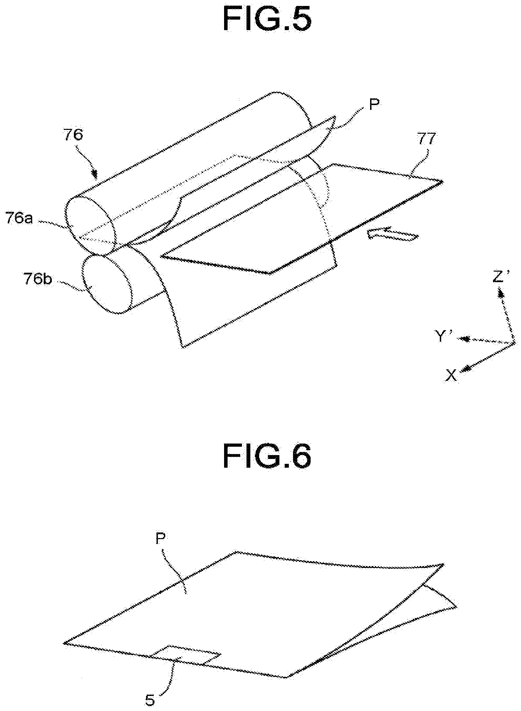

As shown in Fig. 5, the blade 77 moves in the -Y' direction. The blade 77 bends the abnormal sheet P at the position of the storage section 5. The blade 77 pushes the bent abnormal sheet P between the pair of the folding rollers 76a and 76b. The pair of the folding rollers 76a and 76b executes the saddle folding by sandwiching the bent abnormal sheet P. The abnormal sheet P is saddle-folded at the position of the storage section 5, and in this way, the storage section 5 is physically destroyed. If the saddle folding unit 70 includes the folding enhancing section 78 (refer to Fig. 2), the folding enhancing section 78 enhances the folding of the abnormal sheet P saddle-folded by the folding section 76. In this case, the storage section 5 is further physically destroyed. Destruction of the storage section 5 of the abnormal sheet P prevents leakage of information from the storage section 5 of the discarded abnormal sheet P. The saddle folding unit 70 that can be used for the bookbinding processing is used for a destruction processing on the storage section 5. Therefore, additional equipment exclusive for the destruction processing on the storage section is unnecessary, and so there is no cost increase in the post-processing apparatus.

The abnormal sheet P which is saddle-folded as shown in Fig. 6 is discharged to the lower tray 79 shown in Fig. 2. On the other hand, the normal sheet is discharged to the upper tray 62 or the movable tray 61. As a result, the abnormal sheet does not mix with the normal sheet. Thus, it is possible to discard only the abnormal sheet.

The abnormal sheet may be saddle-folded one at a time, but multiple abnormal sheets having the storage sections at the same position may be saddle-folded simultaneously. The operation of the post-processing apparatus 200 in this case is described. In the present invention, "simultaneously" means at the same time, but also includes a case in which the time is slightly different.

The second controller 82 shown in Fig. 2 acquires the position information of the storage section of a first abnormal sheet (simply referred to as a first sheet) and receives the destruction command on the storage section of the first sheet. The second controller 82 conveys the first sheet to the standby section 71. As shown in Fig. 3, the first sheet stands by in the standby section 71. The second controller 82 does not move the first sheet with the sheet position adjustment mechanism 73.

Next, the second controller 82 acquires position information of the storage section 5 of a second abnormal sheet (simply referred to as a second sheet) and receives the destruction command on the storage section 5 of the second sheet. The second controller 82 compares the position of the storage section 5 of the second sheet with the position of the storage section 5 of the first sheet. If the position of the storage section 5 of the second sheet is the same as that of the first sheet, the second controller 82 continues standby of the first sheet in the standby section 71. The second controller 82 conveys the second sheet to the standby section 71. The second controller 82 causes the first sheet and the second sheet to stand by in the standby section 71.

The second controller 82 acquires position information of the storage section 5 of a third abnormal sheet (simply referred to as a third sheet) and receives the destruction command on the storage section 5 of the third sheet. The second controller 82 compares the position of the storage section 5 of the third sheet with the position of the storage section 5 of the first sheet (or the second sheet). If the position of the storage section 5 of the third sheet is different from that of the first sheet (or the second sheet), the second controller 82 simultaneously destroys the storage sections 5 of the first sheet and the second sheet. As shown in Fig. 4, the sheet position adjustment mechanism 73 moves both the first sheet and the second sheet placed in the standby section 71 in the + Z' direction. As shown in Fig. 5, the blade 77 bends both the first sheet and the second sheet at the positions of the storage sections 5. The pair of the folding rollers 76a and 76b executes the saddle folding by sandwiching the bent first sheet and second sheet therebetween. As a result, the first sheet and the second sheet having the storage sections 5 at the same position are simultaneously saddle-folded.

If many normal sheets are processed before the third sheet, the first sheet and the second sheet stand by for a long time in the standby section 71 shown in Fig. 2. The first sheet and the second sheet standby in the state before the storage section is destroyed. The standby section 71 is arranged within the housing 201 of the post-processing apparatus 200. Therefore, even if the abnormal sheet stands by for a long time at the standby section 71, the abnormal sheet before the storage section is destroyed is never taken away. Therefore, the information leakage from the storage section of the abnormal sheet is prevented.

As shown in Fig. 2, the post-processing apparatus 200 of an embodiment includes the acquisition section 81, the saddle folding unit 70, and the second controller 82. The acquisition section 81 acquires the position information of the storage section provided in the abnormal sheet. The saddle folding unit 70 destroys the storage section. The second controller 82 operates the saddle folding unit 70 based on the position information of the storage section acquired by the acquisition section 81 if the predetermined condition is met.

Since the post-processing apparatus 200 destroys the storage section if the predetermined condition is met, it is possible to prevent the information leakage from the storage section of the discarded abnormal sheet. The post-processing apparatus 200 can accurately destroy the storage section based on the position information of the storage section.

The saddle folding unit 70 includes the standby section 71, the folding section 76, and the sheet position adjustment mechanism 73. The abnormal sheet stands by in the standby section 71. The folding section 76 manipulates the sheet by executing the saddle folding to the abnormal sheet and destroys the storage section. The sheet position adjustment mechanism 73 moves the abnormal sheet placed in the standby section 71 so that the position of the storage section becomes the position of the folding section 76.

Since the post-processing apparatus 200 moves the abnormal sheet so that the position of the storage section becomes the position of the folding section 76, it is possible to destroy the storage section accurately. Since the post-processing apparatus 200 destroys the storage section using the saddle folding unit 70 without requiring an additional unit, there is no cost increase in the post-processing apparatus.

If the first sheet meets the predetermined condition, the second controller 82 causes the first sheet to stand by in the standby section 71. If the second sheet after the first sheet meets the predetermined condition and the position information of the storage section of the second sheet acquired by the acquisition section 81 is different from the position information of the storage section of the first sheet, the second controller 82 causes the second sheet to stand by together with the first sheet in the standby section 71. The second controller 82 destroys both the storage section of the second sheet and the storage section of the first sheet.

If the positions of the storage sections of the plural abnormal sheets are the same, the post-processing apparatus 200 can simultaneously destroy the storage sections of the plural abnormal sheets. Since the post-processing apparatus 200 simultaneously destroys the storage sections of the plural abnormal sheets, destruction time can be shortened. The post-processing apparatus 200 destroys the storage section collectively after causing a plurality of the abnormal sheets to stand by. Therefore, the post-processing apparatus 200 does not need to stop a following image forming processing on the sheet until the destruction of the storage section of the abnormal sheet is ended. Therefore, the post-processing apparatus 200 can shorten image forming time.

If the first sheet meets the predetermined condition, the second controller 82 causes the first sheet to stand by in the standby section 71. If the third sheet meets the predetermined condition after the first sheet and the position information of the storage section of the third sheet acquired by the acquisition section 81 is different from the position information of the storage section of the first sheet, the second controller 82 destroys the storage section of the first sheet.

Since the post-processing apparatus 200 destroys only the storage section of the first sheet separately from the third sheet, it is possible to reliably destroy the storage section of the first sheet. The post-processing apparatus 200 does not destroy the storage section of the first sheet until the third sheet appears. Therefore, the post-processing apparatus 200 can destroy the storage section of the abnormal sheet of which the storage section is located at the same position as that of the first sheet at the same time as the first sheet by causing the abnormal sheet to stand by in the standby section. Therefore, the post-processing apparatus 200 can reduce the destruction time.

The standby section 71 is arranged within the housing 201 of the post-processing apparatus 200.

Thus, even if the abnormal sheet stands by for a long time in the standby section 71, the abnormal sheet before the storage section is destroyed is never taken away. Therefore, the post-processing apparatus 200 can prevent the information leakage from the storage section of the abnormal sheet.

If the predetermined condition is met in the image forming processing, the post-processing apparatus 200 of an embodiment destroys the storage section. On the contrary, the user may instruct the destruction of the storage section. In this case, the user sets the abnormal sheet in which the storage section is required to be destroyed in the sheet housing section 18 or a manual feeding tray of the image forming apparatus main body 100. The user also instructs the storage section destruction mode in the operation section 14 of the image forming apparatus main body 100. In the storage section destruction mode, the image forming apparatus main body 100 conveys the abnormal sheet to the writing section 7 and the reading section 8 without forming an image on the abnormal sheet. The "predetermined condition" in this case is that the storage section destruction mode is instructed. The image forming apparatus 1 destroys the storage section according to an embodiment. In the storage section destruction mode, the image forming apparatus main body 100 and the post-processing apparatus 200 jointly make up a destruction device.

The post-processing apparatus 200 of an embodiment destroys the storage section with the saddle folding unit 70. On the other hand, it is also possible to destroy the storage section by another destruction section.

The post-processing apparatus 200 of an embodiment destroys the storage section by setting that writing to the storage section fails as the predetermined condition. On the contrary, it is also possible to destroy the storage section if another predetermined condition is met.

According to at least one embodiment described above, if the predetermined condition is met, based on the position information of the storage section acquired by the acquisition section 81, by including the second controller 82 for operating the saddle folding unit 70, it is possible to prevent the information leakage from the storage section of the discarded abnormal sheet.

It is noted that what has been described with reference to a method correspondingly applies to an apparatus, and vice versa.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of embodiments described herein may be made without departing from the spirit of the invention. The accompanying claims and their equivalents are intended to cover such forms or modifications as would fall within the scope and spirit of the invention.

## Claims

1. A post-processing apparatus, comprising:
an acquisition section configured to acquire position information of a storage section arranged in a sheet;
a destruction section configured to destroy the storage section; and
a controller configured to operate the destruction section based on the position information of the storage section acquired by the acquisition section when a predetermined condition is met.

2. The post-processing apparatus according to claim 1, wherein
the destruction section comprises a standby section configured to store a sheet in standby, a folding section configured to destroy the storage section by executing saddle folding of the sheet, and a sheet position adjustment mechanism configured to move the sheet placed in the standby section so that a position of the storage section becomes a position of the folding section.

3. The post-processing apparatus according to claim 2, wherein
the controller is configured to control a first sheet to stand by in the standby section when the first sheet meets the predetermined condition,
the controller is configured to control a second sheet to stand by together with the first sheet in the standby section when the second sheet after the first sheet meets the predetermined condition and the position information of the storage section of the second sheet acquired by the acquisition section is the same as the position information of the storage section of the first sheet, and
the controller is configured to destroy both the storage section of the second sheet and the storage section of the first sheet.

4. The post-processing apparatus according to claim 2 or 3, wherein
the controller is configured to control the first sheet to stand by in the standby section when the first sheet meets the predetermined condition, and
the controller is configured to destroy the storage section of the first sheet when a third sheet after the first sheet meets the predetermined condition and the position information of the storage section of the third sheet acquired by the acquisition section is different from the position information of the storage section of the first sheet.

5. The post-processing apparatus according to claim 3 or 4, wherein
the controller is configured to control the first sheet to stand by in the standby section when the first sheet meets the predetermined condition, and
the controller is configured to control the storage section of the first sheet when a third sheet after the first sheet meets the predetermined condition, and the position information of the storage section of the third sheet acquired by the acquisition section is different from the position information of the storage section of the first sheet.

6. The post-processing apparatus according to any of claims 2 to 5, wherein
the standby section is arranged in a housing of the post-processing apparatus.

7. The post-processing apparatus according to any of claims 1 to 6, wherein the predetermined condition is a condition that at least part of a writing operation to the storage section fails.

8. A method of processing a sheet containing a storage section, comprising:
sending, by a controller, data to be written in the storage section in a writing operation;
writing data to the storage section in the writing operation;
detecting a position of the storage section; and
determining that at least a part of the writing operation fails when data read from the storage section differs from the data sent by the controller.

9. The method of claim 8, wherein detecting the position of the storage section comprises:
repeating the writing operation when the sheet is conveyed to a position where the writing operation is performed, and
determining the position of the storage section when at least a part of the writing operation is normal.

10. The method of claim 8 or 9, wherein detecting the position of the storage section comprises:
obtaining information inputted to the controller by a user, and wherein preferably the information inputted by the user includes a designated position of the storage section on the sheet.

11. The method of any of claims 8 to 10, further comprising:
destroying the storage section after determining that at least a part of the writing operation fails,
wherein destroying the storage section comprises folding the storage section.

12. The method of any of claims 8 to 11, further comprising:
destroying the storage section by bending the sheet containing the storage section, and then folding the bent sheet.

13. An apparatus, comprising:
a folding section configured to fold a sheet received by the folding section; and
a controller configured to
determine a location of a storage section on the sheet,
and
cause information in the storage section to be removed by manipulating the sheet when a predetermined condition is met.

14. The apparatus according to claim 13, further comprising:
a standby section configured to store a sheet in standby; and
a position adjuster configured to move the sheet placed in the standby section such that at least a portion of the sheet aligns with the folding section.

15. The apparatus according to claim 14, wherein the controller is configured to:
upon determining that the sheet meets the predetermined condition, cause another sheet to remain in the standby section;
determine whether the another sheet meets the predetermined condition; and
responsive to determining that the sheet and the another sheet meet the predetermined condition, causing removal of information from respective storage sections of the first and second sheets.
